Europäisches Patentamt

European Patent Office

Office européen des brevets

(19)

(11) Numéro de publication: **0 181 817**
**B1**

(12) **FASCICULE DE BREVET EUROPEEN**

(45) Date de publication du fascicule du brevet:
24.10.90

(51) Int. Cl.5: **G06E 3/00, H04N 5/335**

(21) Numéro de dépôt: 85402125.0

(22) Date de dépôt: 05.11.85

(54) Dispositif analogique parallèle de traitement local d'un signal bidimensionnel.

(30) Priorité: 07.11.84 FR 8416948

(43) Date de publication de la demande:
21.05.86 Bulletin 86/21

(45) Mention de la délivrance du brevet:
24.10.90 Bulletin 90/43

(84) Etats contractants désignés:
CH DE GB LI NL SE

(56) Documents cités:
THE RADIO AND ELECTRONIC ENGINEER,
vol. 50, no. 5, mai 1980, pages 249-257, Institution of
Electronic and Radio Engineers, Londres, GB; S.G.
CHAMBERLAIN: "Advances in c.c.d. scanners with
on-chip signal processing for electronic imaging"
SPIE INTERNATIONAL OPTICAL COMPUTING
CONFERENCE, vol. 232, livre
II, 10-11 avril 1980, Washington D.C., US,
pages 128-136, IEEE, US; B.H. SOFFER et al.: "Optical
computing with variable grating mode liquid crystal
devices"
OPTICAL ENGINEERING,
vol. 19, no. 3, mai/juin 1980, pages 421-424, Bellingham,
US; J.E. HALL et al.: "Real-time image enhancement
using 3x3 pixel neighborhood operator functions"

(73) Titulaire: Anizan, Paul, Bâtiment A2 Résidence d'Armor,
F-22300 Lannion(FR)
Titulaire: Collobert, Daniel, Ker Skrivel Izellan Ploulec'h,
F-22300 Lannion(FR)
Titulaire: Massaloux, Dominique, 109, rue Saint Guirec,
F-22700 Ploumanac'h(FR)

(72) Inventeur: Anizan, Paul, Bâtiment A2 Résidence
d'Armor, F-22300 Lannion(FR)
Inventeur: Collobert, Daniel, Ker Skrivel Izellan
Ploulec'h, F-22300 Lannion(FR)
Inventeur: Massaloux, Dominique, 109, rue Saint Guirec,
F-22700 Ploumanac'h(FR)

(74) Mandataire: Mongrédien, André et al, c/o
BREVATOME 25, rue de Ponthieu, F-75008 Paris(FR)

(56) Documents cités: (suite)
Le dossier contient des informations techniques
présentées postérieurement au dépôt de la demande et
ne figurant pas dans le présent fascicule.

## Description

La présente invention a pour objet un dispositif analogique parallèle de traitement local d'un signal bidimensionnel. Ce signal traité peut être optique, électrique, acoustique ou autre.

Dans le cas où le signal reçu est un signal optique bidimensionnel, c'est-à-dire une image, le dispositif de l'invention peut être utilisé avantageusement dans de nombreux domaines parmi lesquels l'imagerie médicale, la robotique (reconnaissance des formes), la vidéocommunication (compression de l'information), la météorologie, ... Dans le cas d'un signal bidimensionnel de type acoustique, le dispositif de l'invention peut être notamment utilisé pour la réalisation de traitement tel qu'un histogramme acoustique.

Le traitement local d'un signal bidimensionnel est réalisé par un moyen recevant, en parallèle, un ensemble de signaux composantes organisés suivant une matrice de p lignes et n colonnes (ou p >1 et n>1) et délivrant, en parallèle, un ensemble de signaux composantes organisés de la même manière, où chaque signal composante de sortie est fonction du signal composante d'entrée de même rang dans la matrice et des signaux composantes d'entrée situés dans le voisinage dudit signal composante d'entrée.

La fonction reliant un signal composante de sortie à un ensemble de signaux composantes d'entrée est appelée opérateur de traitement. Cet opérateur peut être linéaire ou non. Une fenêtre définit le nombre de signaux composantes d'entrée contribuant à un signal composante de sortie.

Le dispositif permet, dans le cas où le signal bidimensionnel est un signal optique, de réaliser des traitements tels qu'un lissage, une élimination de bruit, un accroissement de contrastes, une détection de contours, de motifs ou de textures,..

Dans la suite du texte, on s'attachera essentiellement aux dispositifs de traitement local d'une image (au sens usuel, c'est-à-dire un signal optique bidimensionnel). Il est bien entendu que cet exemple est pris à titre illustratif, mais que l'invention s'applique à tous les signaux dimensionnels, quels qu'en soient leur nature.

On va maintenant décrire les principaux dispositifs de traitement local d'image selon l'art connu. Ces dispositifs peuvent être rangés en deux catégories: les dispositifs numériques et les dispositifs analogiques.

Le traitement local d'image est effectué principalement par des dispositifs numériques. Ce traitement, effectué sur un ordinateur classique, est lent car le nombre d'opérations élémentaires est élevé, de l'ordre de $10^6$ pour une image de 320 x 320 points avec une fenêtre de 3 x 3 points. Ainsi, à titre d'exemple, le traitement local d'une image de 512 x 512 points sur un minicalculateur de type PDP 11 de Digital Equipment demande environ 30 s de calcul.

Pour atteindre des vitesses de traitement compatibles avec la cadence d'un signal vidéo qui délivre 25 images par seconde selon les normes européennes, 30 images par seconde selon les normes américaines et japonaises, il faut recourir soit à un ordinateur très puissant, soit à des systèmes particuliers du type processeurs en parallèle ou machine systolique. Ces différents systèmes présentent l'inconvénient d'être complexes à réaliser et à programmer, et en outre d'être très onéreux.

On connaît par ailleurs des dispositifs analogiques de traitement local d'une image. Dans leur principe, ces dispositifs font appel à un parallélisme très élevé, car il y a un traitement simultané de tous les points de l'image. Ces dispositifs sont réalisés soit à l'aide de composants discrets, soit par l'assemblage de circuits intégrés traitant chacun une centaine de points d'image. Ces dispositifs ne sont donc, en pratique, pas utilisables pour traiter des images de taille normale, c'est-à-dire comportant au moins $10^5$ points d'image, à cause du nombre de composants discrets ou du nombre de circuits intégrés nécessaires, de la complexité de leur assemblage et de leur coût.

Le but de l'invention est de remédier aux inconvénients des dispositifs connus. Ce but est atteint par un dispositif analogique parallèle de traitement local réalisé sous forme de couches minces. Cette technologie offre une rapidité de traitement très importante qui permet de traiter, en temps réel, des signaux vidéos tels que des signaux de télévision. De plus, cette technologie en couches minces est utilisée de manière connue pour la réalisation de matrices de transistors pour l'adressage des écrans plats. Cette technologie est donc adaptée au traitement d'image comprenant $10^5$ points élémentaires ou plus. Cette technologie offre de plus l'avantage de se prêter à une production de masse et donc à la réalisation d'un dispositif de traitement à faible coût de revient. Enfin, la réalisation du dispositif de traitement sous forme de couches minces permet son intégration à des appareils de prise d'image ou de restitution d'image tels que les caméras solides ou les écrans plats.

De manière plus précise, l'invention a pour objet un dispositif analogique parallèle de traitement local d'un signal bidimensionnel comprenant un moyen d'entrée, un moyen de traitement et un moyen de sortie, le moyen d'entrée recevant ledit signal bidimensionnel et délivrant sur un ensemble de points élémentaires d'entrée organisés en matrice, un ensemble de signaux électriques parallèles d'entrée, le moyen de traitement comportant :

- une première couche conductrice dans laquelle est gravé un ensemble de lignes conductrices 24 parallèles, lesdites lignes véhiculant pour chaque point élémentaire deux signaux électriques de signes opposés générés par le moyen d'entrée,
- une couche résistive,

- une couche isolante,
- une deuxième couche conductrice dans laquelle est gravé un ensemble de lignes conductrices parallèles, chacune des lignes étant reliée à la couche résistive par une pluralité de trous de contacts ménagés dans la couche isolante, la surface desdits trous de contacts représentant les coefficients de l'opérateur linéaire,
- une couche isolante,
- une troisième couche conductrice dans laquelle sont gravés les points élémentaires de sortie, chacun relié à une ligne conductrice par un trou dans la seconde couche isolante.

L'invention a également pour objet un dispositif analogique parallèle de traitement local d'un signal bidimensionnel comprenant un moyen d'entrée un moyen de traitement et un moyen de sortie, ledit dispositif étant caractérisé en ce que :

- le moyen d'entrée et le moyen de traitement comportent une couche photoconductrice et résistive,
- une couche de lignes conductrices de géométrie telle que quatre fractions de conducteur se trouvent au droit de chaque point élémentaire conducteur, ces lignes véhiculant des tensions alternatives opposées deux à deux et en quadrature, et
- une couche isolante placée sur la couche photoconductrice et résistive et comportant une pluralité de trous, la tension présente à la base de chaque trou reflétant l'intensité lumineuse du signal optique reçu par le point élémentaire affecté d'un coefficient lié à la taille du trou et d'un signe lié au conducteur au droit duquel il se trouve.

Le nombre de points élémentaires de sortie est en général égal au nombre de points élémentaires d'entrée. Toutefois, dans certains cas particuliers, ces nombres peuvent être différents.

Selon un mode de réalisation préféré, le traitement de chaque signal d'entrée est limité à une fenêtre spatiale de taille déterminée.

De manière préférée, pour le traitement d'un signal optique bidimensionnel, le moyen d'entrée comporte une couche photoconductrice.

De manière préférée, pour le traitement d'un signal électrique bidimensionnel, le moyen d'entrée comporte une matrice d'adressage.

Selon un mode de réalisation préféré, le moyen de sortie comporte un moyen d'affichage, qui peut être par exemple un afficheur à cristaux liquides.

Ceci permet une visualisation directe du signal bidimensionnel traité.

Selon un autre mode de réalisation préféré, le moyen de sortie comprend une matrice d'adressage.

Les caractéristiques et avantages de l'invention ressortiront mieux de la description qui va suivre, donnée à titre illustratif mais non limitatif, en référence aux dessins annexés, sur lesquels:

- la figure 1 illustre schématiquement la structure en couches d'un premier mode de réalisation du dispositif de traitement selon l'invention,
- la figure 2 est une vue éclatée représentant un mode de réalisation du dispositif de traitement de l'invention comprenant un moyen d'entrée effectuant une conversion optoélectrique et un moyen de traitement définissant un opérateur mathématique linéaire,
- la figure 3 est une vue selon A du plan P de la figure 2,
- les figures 4A, 4B et 4C illustrent un second mode de réalisation du dispositif de traitement selon l'invention, dans lequel le moyen d'entrée effectue une conversion optoélectrique et dans lequel le moyen de traitement définit un opérateur mathématique non linéaire.

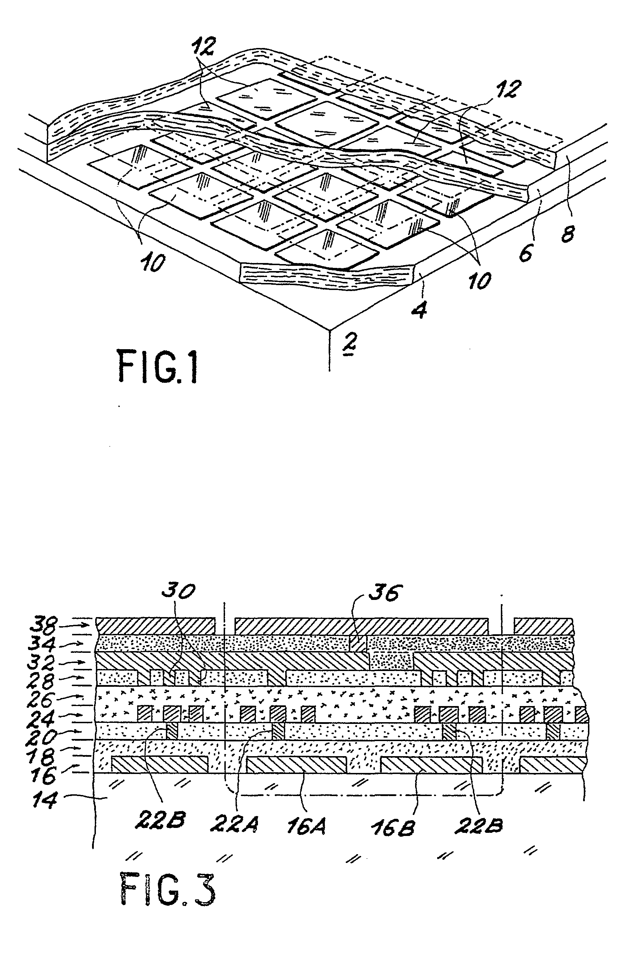

La figure 1 illustre la structure du dispositif de traitement de l'invention. Ce dispositif est constitué d'un moyen d'entrée, d'un moyen de traitement et d'un moyen de sortie réalisés sous forme de couches minces sur un substrat.

Sur le substrat 2, sont donc disposés successivement un ensemble de couches formant le moyen d'entrée 4, un ensemble de couches formant le moyen de traitement 6 et un ensemble de couches formant le moyen de sortie 8.

Le moyen d'entrée 4 reçoit le signal bidimensionnel à traiter. Ce signal peut être de nature quelconque: optique, électrique, acoustique ou autre. Il peut se présenter sous forme d'un signal série, par exemple un signal vidéo reçu sous forme de signal électrique, ou sous forme parallèle, par exemple une image optique. Le moyen d'entrée 4 a pour fonction de convertir ce signal bidimensionnel reçu en un ensemble de signaux électriques parallèles organisés en matrice. Ces signaux parallèles sont délivrés sur un ensemble de points élémentaires conducteurs 10, organisés en matrices, et constituant la couche intermédiaire entre le moyen d'entrée 4 et le moyen de traitement 6.

Le moyen de traitement 6 reçoit donc une image électrique formée d'un ensemble de points représentant le signal bidimensionnel reçu par le moyen d'entrée 4. Il délivre sur un ensemble de points élémentaires conducteurs 12 organisés en matrice une autre image électrique, qui se déduit de l'image électrique reçue par l'application d'un opérateur mathématique à chaque point de cette image reçue. Le traitement opéré est un traitement local, c'est-à-dire que le signal électrique reçu par un point élémentaire de sortie 12 est fonction du signal délivré par le point élémentaire d'entrée 10 de même rang et de même colonne dans la matrice et par les signaux délivrés par des points élémentaires 10, voisins de ce dernier.

Dans les dispositifs de traitement local connus, la taille de la fenêtre de traitement est souvent de 3 x 3 (le signal délivré par un point élémentaire de sortie 12 est alors fonction des signaux délivrés par un point élémentaire d'entrée 10 et ses huit voisins). La taille de la fenêtre est limitée dans les dispositifs connus car le temps nécessaire au calcul d'une image varie comme le carré de la fenêtre.

En revanche, le dispositif de l'invention présente la caractéristique remarquable que le temps de calcul d'une image est indépendant de la taille de la fenêtre. Ceci constitue un avantage supplémentaire de l'invention car l'utilisation d'une fenêtre de taille plus importante permet en général un traitement plus fin de l'image.

Il est important de remarquer que si, en général, le nombre de points élémentaires de sortie 12 est égal au nombre de points élémentaires d'entrée 10, comme on l'a représenté sur la figure 1, aucun obstacle n'empêche de réaliser un moyen de traitement dans lequel le nombre de points élémentaires de sortie est différent, inférieur ou supérieur, du nombre de points élémentaires d'entrée. Le nombre de points élémentaires de sortie peut par exemple être inférieur au nombre de points élémentaires d'entrée dans des applications telles que la compression d'information.

L'image électrique traitée par le moyen de traitement 6 est reçue par le moyen de sortie 8. Ce moyen de sortie a pour fonction de convertir l'image électrique reçue en un signal bidimensionnel de nature et de forme adaptées à l'exploitation envisagée. Ce moyen de sortie 8 peut notamment opérer une conversion inverse de celle réalisée par le moyen d'entrée 4.

Selon un premier mode de réalisation préféré, le moyen de sortie 8 réalise une conversion électro-optique de l'image électrique délivrée par le moyen de traitement 6. Cette conversion peut être réalisée, par exemple, par un afficheur comprenant un film de cristal liquide.

On sait que les cristaux liquides sont rapidement dégradés s'ils sont soumis à une tension continue. Il est donc clair que dans un exemple de réalisation du dispositif de l'invention dans lequel le moyen de traitement comporte un film de cristal liquide, le moyen d'entrée 4 doit délivrer en chaque point élémentaire d'entrée 10 un signal électrique de valeur moyenne nulle, par exemple un signal de tension alternative.

Selon un autre mode de réalisation préféré du dispositif de la figure 1, le moyen de sortie 8 comporte une matrice d'adressage permettant de multiplexer les signaux électriques délivrés par chacun des points élémentaires de sortie 12 afin de transmettre l'image traitée sous la forme d'une trame d'un signal vidéo.

On va maintenant décrire, à titre d'exemple, un premier mode de réalisation du dispositif de traitement de l'invention dans lequel l'opérateur mathématique de traitement est un opérateur linéaire et un deuxième mode de réalisation du dispositif de traitement de l'invention dans lequel l'opérateur mathématique est non linéaire, mais peut être exprimé à l'aide de deux opérateurs linéaires. Comme on le verra dans la suite de la description, ces fonctions linéaires peuvent être facilement représentées, dans le moyen de traitement 6, par une couche résistive.

Le dispositif de traitement de l'invention n'est donc pas limité aux opérateurs linéaires mais peut au contraire réaliser des opérateurs très variés. Il est par exemple possible de réaliser un opérateur comportant un effet de seuil en disposant dans le moyen de traitement 6 un ensemble de couches minces formant une diode. Ces opérateurs non linéaires sont en pratique, moins employés que les opérateurs linéaires.

La réalisation d'un moyen de traitement incluant un opérateur non linéaire est donc formellement identique à la réalisation d'un moyen de traitement incluant un opérateur linéaire. La différence résidant en ce que la couche résistive est remplacée ou est complétée par une ou plusieurs couches de nature différente. Ces modifications sont à la portée de l'homme de l'art. En conséquence, on va décrire uniquement deux modes de réalisation du dispositif de l'invention dans lequel le moyen de traitement inclut un opérateur linéaire, ou un opérateur non linéaire qui peut être exprimé à l'aide de deux opérateurs linéaires.

De manière générale, et c'est le cas des opérateurs mis en oeuvre dans les dispositifs qui font l'objet des figures suivantes, l'opérateur comporte simultanément des coefficients positifs et des coefficients négatifs. Or, la couche résistive du moyen de traitement 6 ne permet d'exprimer que la valeur absolue de ces coefficients. Pour pouvoir mettre en oeuvre l'opérateur, il faut donc qu'en chaque point élémentaire d'entrée 10 le moyen d'entrée 4 délivre le signal de tension associé à ce point élémentaire d'entrée et le signal de tension opposé. Dans la pratique, chaque point élémentaire d'entrée 10 peut donc être constitué d'une pluralité d'éléments conducteurs disjoints.

On va maintenant décrire un dispositif de traitement local d'image conforme à l'invention qui réalise un accroissement du contraste de l'image reçue permettant ainsi une meilleure détection des contours. Cet opérateur, de type "laplacien", est représenté sur le tableau 1 ci-dessous avec une fenêtre de traitement de 3 x 3.

TABLEAU 1

| −1 | −1 | −1 |
|----|----|----|
| −1 | 8  | −1 |
| −1 | −1 | −1 |

Cet opérateur permet de délivrer en chaque point élémentaire de sortie du moyen de traitement un signal de tension égal à 8 fois le signal de tension du point élémentaire d'entrée correspondant diminué de la somme des signaux de tension des points élémentaires voisins de ce point élémentaire d'entrée.

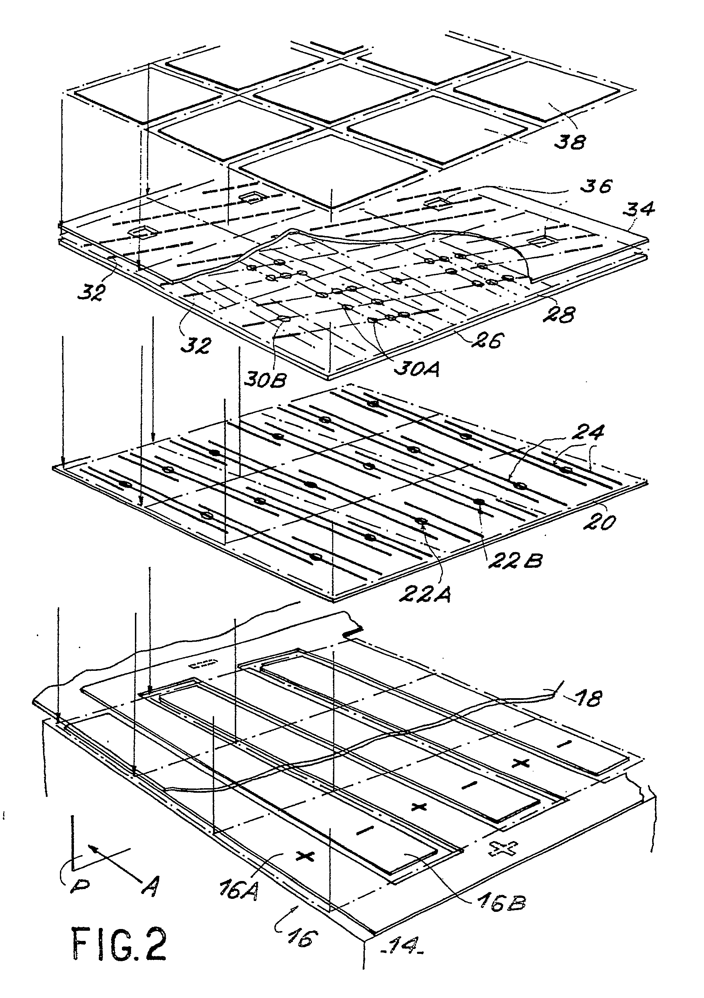

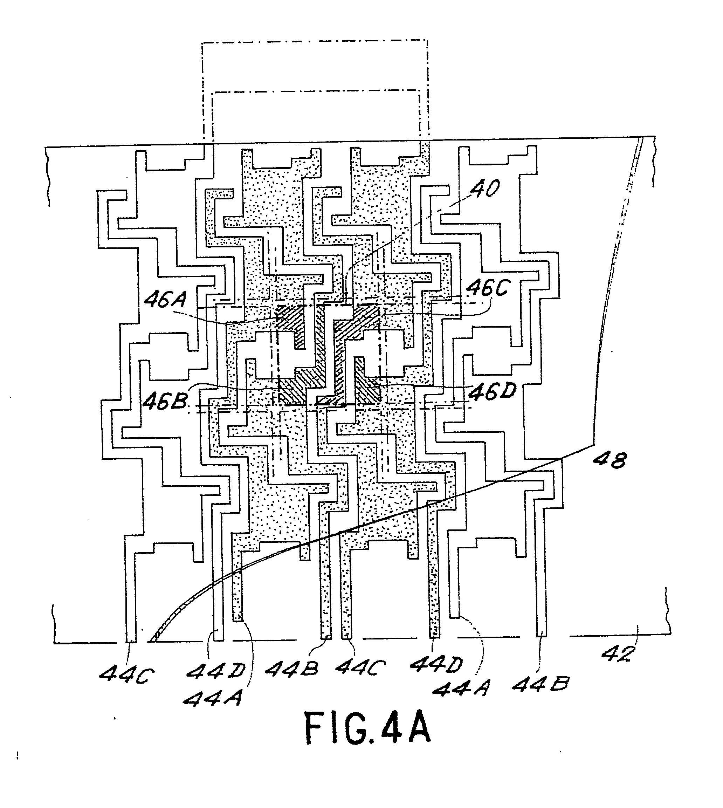

La figure 2 représente une vue éclatée du moyen d'entrée et du moyen de traitement d'un dispositif de traitement conforme à l'invention et mettant en oeuvre cet opérateur. Cette figure sera décrite conjointement avec la figure 3 représentant une coupe suivant A du plan P de la figure 2. Le moyen d'entrée représenté sur cette figure est de type caméra solide et permet une conversion d'une image lumineuse en un ensemble de signaux électriques parallèles disposés en matrice.

Ce moyen d'entrée comprend un ensemble de couches minces déposées et gravées sur un substrat transparent 14. Chacune de ces couches a une épaisseur d'environ 100 nanomètres. Le moyen d'entrée comprend trois couches :

- une couche conductrice transparente 16 dans laquelle sont gravés deux peignes interdigités 16A et 16B amenant, en chaque point élémentaire d'entrée, deux tensions opposées,
- une couche 18 photoconductrice pour convertir l'intensité lumineuse reçue par un point élémentaire d'entrée en un signal électrique,
- une couche électriquement isolante 20 dans laquelle sont ménagés deux trous 22A, 22B, par point élémentaire, disposés respectivement en regard du conducteur 16A et du conducteur 16B.

L'image lumineuse traitée par le dispositif de traitement est reçue à travers le substrat transparent 14. Elle traverse la couche conductrice 16 réalisée par exemple en oxyde d'indium ou en oxyde d'étain, transparent aux rayons lumineux si l'épaisseur de la couche n'est pas trop importante. Ce signal lumineux reçu par un point élémentaire est converti en deux signaux électriques de signes opposés par la couche photoconductrice 18 réalisée par exemple en silicium amorphe hydrogéné. L'amplitude de ces signaux électriques est fonction de l'intensité lumineuse reçue par le point élémentaire.

La couche photoconductrice 18 est recouverte d'une couche isolante, par exemple en $SiO_2$ dans laquelle sont réalisés deux trous 22A et 22B pour chaque point élémentaire. Les bases de ces trous constituent les éléments conducteurs du point élémentaire d'entrée et assurent la liaison entre le moyen d'entrée et le moyen de traitement.

Ce moyen de traitement comprend, dans le mode particulier de réalisation de la figure 2 :

- une première couche conductrice dans laquelle est gravé un ensemble de lignes conductrices parallèles 24,
- une couche résistive 26,
- une couche isolante 28,
- une deuxième couche conductrice dans laquelle est gravé un second ensemble de lignes conductrices parallèles 32, chacune desdites lignes étant relié la couche résistive par une pluralité de trous de contact ménagés dans la couche isolante 28,
- une couche isolante 34,
- une troisième couche conductrice dans laquelle sont gravés les points élémentaires de sortie 38, chacun relié à une ligne conductrice 32 par un trou 36 dans la couche isolante 34.

Ces différentes couches peuvent être réalisées selon tout procédé et dans tout matériau connu de l'homme de l'art. Les couches conductrices peuvent notamment être réalisées en Al, les couches isolantes en $SiO_2$ et la couche résistive en a:Si-H dopé.

La première couche conductrice est gravée de manière à créer un ensemble de lignes conductrices parallèles 24, chaque ligne conductrice ayant une longueur sensiblement égale à la dimension de la fenêtre de traitement et étant centrée sur un trou de contact 22A, 22B de la couche d'isolant 20.

Cette couche 24 est recouverte successivement d'une couche résistive 26 et d'une couche isolante 28 dans laquelle sont ménagés des trous 30A, 30B. Ces trous sont disposés au droit des lignes conductrices de la couche 24.

La tension électrique prélevée dans chaque trou 30A, 30B est donc fonction de trois facteurs : la résistivité de la couche 26, la tension présente sur la ligne conductrice de la ligne 24 située en regard dudit trou, et enfin la surface dudit trou. La couche 26 ayant une résistivité homogène, les différences de résistivité au droit de chaque trou 30A, 30B sont donc fonction essentiellement de la surface de ce trou.

Ceci permet précisément d'obtenir les différents coefficients de l'opérateur de traitement. En effet, considérons une ligne conductrice 32 gravée dans la deuxième couche conductrice déposée sur la couche isolante 28. Cette ligne conductrice 32 est disposée de manière à être reliée, par l'intermédiaire de trous 30A, 30B, avec des lignes conductrices gravées dans la couche 24. De manière plus précise, cette ligne conductrice 32 est reliée à 9 lignes conductrices de la couche 24 (pour une fenêtre 3x3), lesdites lignes conductrices délivrant des signaux de tension dont le signe correspond au signe du coefficient de l'opérateur de traitement.

Dans le cas particulier de l'opérateur "laplacien", que nous avons considéré, le coefficient central de l'opérateur est huit fois plus important que les autres coefficients. Pour que cette différence de coefficient se retrouve lors de la sommation, sur la ligne conductrice 32, des signaux délivrés par les lignes conductrices 24, il faut que le trou de contact 30B reliant la ligne conductrice 32 associée à un point élémentaire et la ligne conductrice gravée dans la couche 24 associée au même point élémentaire ait une surface plus importante que les autres trous de contact 30A reliant ladite ligne conductrice 32 aux lignes conductrices 24 correspondant aux voisins dudit point élémentaire.

Pour chaque point élémentaire, le signal résultant de l'application de l'opérateur de traitement à ce point élémentaire et à ses voisins est donc obtenu sur la ligne conductrice 32. Ces lignes conductrices 32 forment un ensemble de linges parallèles sensiblement perpendiculaires à l'ensemble de lignes conductrices parallèles gravées dans la couche 24.

Le moyen de traitement est enfin pourvu d'une couche isolante 34 dans laquelle est ménagé un trou de contact 36 par point élémentaire. Cette couche isolante est recouverte d'une couche conductrice dans laquelle sont gravés des points élémentaires de sortie 38, qui sont chacun en contact avec une ligne conductrice 32 par l'intermédiaire des trous de contact 36.

On vient de montrer, en référence aux figures 2 et 3, un dispositif de traitement conforme à l'invention mettant en oeuvre un opérateur mathématique classique. On a pu constater que la réalisation pratique du dispositif de l'invention ne présente aucune difficulté, la technologie des couches minces étant bien maîtrisée dans de nombreuses techniques d'une part, et le nombre de couches nécessaires à la réalisation du moyen de traitement étant peu élevé d'autre part.

Il faut noter que l'on n'a pas représenté le moyen de sortie du dispositif de traitement sur les figures 2 et 3. On a déjà évoqué plus haut deux modes de réalisation privilégiés de ce moyen de sortie, à savoir une matrice d'adressage permettant de délivrer un signal électrique multiplexé, et un dispositif d'affichage à cristal liquide permettant une visualisation directe du signal bidimensionnel après traitement.

La réalisation pratique de ces différents types de moyens de sortie étant bien connue dans des domaines connexes de ceux de l'invention, il n'est pas nécessaire de détailler plus avant les différents modes de réalisation du moyen de sortie qui sont à la portée de l'homme de l'art. En revanche, il nous a semblé intéressant de décrire le moyen d'entrée car, si les caméras solides sont bien connues et procèdent d'un principe identique à celui du moyen d'entrée décrit, ce moyen d'entrée comporte des aménagements en vue de délivrer, en chaque point élémentaire, deux signaux de tension opposée.

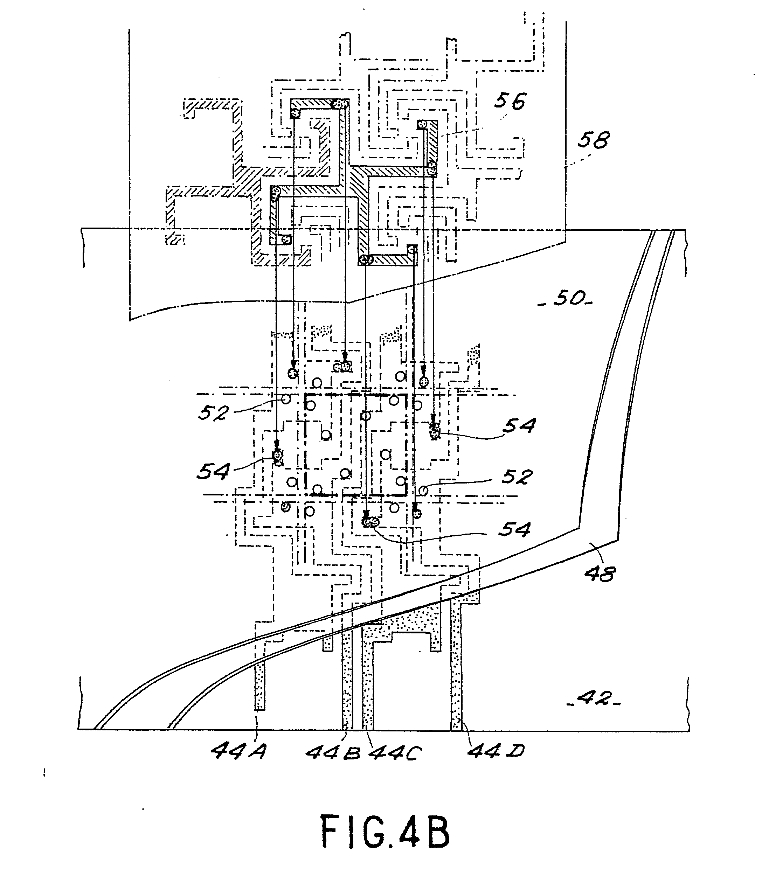

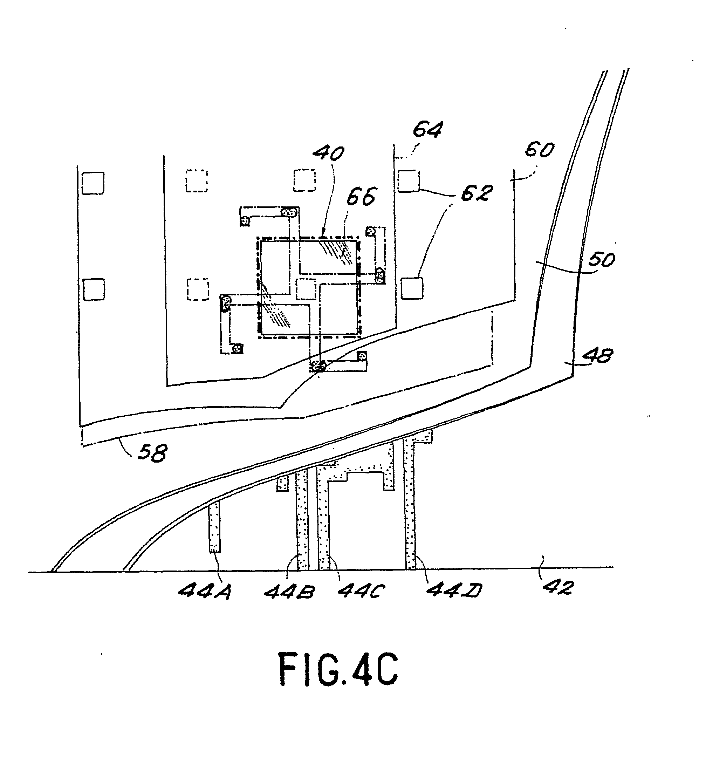

Le dispositif de traitement qui vient d'être décrit comporte principalement quatre couches : deux couches de lignes conductrices 24, 32, une couche résistive 26 et une couche photoconductrice 18. Il est possible de simplifier le dispositif en réalisant le moyen d'entrée et le moyen de traitement à l'aide de seulement deux couches principales : une couche photoconductrice et résistive, et une couche de lignes conductrices. Un dispositif de traitement conforme à l'invention suivant cette réalisation simplifiée va maintenant être décrite en référence aux figures 4A, 4B et 4C.

Ce mode de réalisation simplifié peut être utilisé pour représenter de nombreux opérateurs mathématiques, et notamment l'opérateur "laplacien" décrit en référence aux figures 2 et 3. Pour illustrer ce second mode de réalisation, on va décrire un dispositif de traitement mettant en oeuvre un opérateur non linéaire : l'opérateur "SOBEL". Cet opérateur peut être vu comme un opérateur vectoriel comportant deux composantes, formées chacune d'un opérateur linéaire.

Cet opérateur comporte 18 coefficients (pour une fenêtre 3x3), parmi lesquels 6 coefficients sont nuls. Le nombre de coefficients non nuls reste important. Par suite, la réalisation du moyen de traitement est délicate surtout dans le mode de réalisation ne comportant qu'une couche photoconductrice et résistive et une couche de lignes conductrices.

Cet opérateur peut être simplifié pour conserver un nombre plus restreint de coefficients. On va décrire un mode de réalisation du dispositif de l'invention mettant en oeuvre un opérateur "SOBEL tronqué" comportant seulement 8 coefficients non nuls. On constate expérimentalement que, pour beaucoup d'applications, cet opérateur fournit des résultats très proches de ceux du "SOBEL".

Les composantes de l'opérateur "SOBEL tronqué" sont représentées sur le tableau 2 ci-dessous.

TABLEAU 2

$$G_x = \begin{array}{|c|c|c|} \hline 1 & 2 & 0 \\ \hline 0 & 0 & 0 \\ \hline 0 & -2 & -1 \\ \hline \end{array} \qquad G_y = \begin{array}{|c|c|c|} \hline 0 & 0 & -1 \\ \hline 2 & 0 & -2 \\ \hline 1 & 0 & 0 \\ \hline \end{array}$$

L'opérateur "SOBEL tronqué" consiste à appliquer à chaque ensemble de 9 points élémentaires d'entrée (pour une fenêtre 3x3) l'opérateur composante $G_x$ pour délivrer une première composante d'un signal de sortie, et l'opérateur composante $G_y$ pour délivrer une seconde composante d'un signal de sortie, le signal délivré par le point élémentaire de sortie étant égal au module dudit signal de sortie. Ce module est particulièrement facile à obtenir dans le cas où les signaux reçus par le moyen de traitement sont des signaux alternatifs. En effet, dans ce cas, le module du signal de sortie est simplement égal à la somme de ses composantes si celles-ci sont en quadrature.

L'opérateur "SOBEL tronqué" étant formé de deux opérateurs linéaires, chaque point élémentaire d'entrée comporte 4 éléments conducteurs, deux éléments conducteurs étant associés à l'opérateur $G_x$ et délivrant des signaux de tension opposés dont l'intensité est fonction du signal bidimensionnel reçu, et les deux autres éléments conducteurs étant associés à l'opérateur $G_y$ et délivrant des signaux de tension opposés également fonction du signal bidimensionnel reçu.

Dans le cas particulier, intéressant en pratique, ou ces signaux de tension sont alternatifs, les deux éléments conducteurs associés à l'opérateur $G_x$ reçoivent deux signaux alternatifs opposés et les deux éléments conducteurs associés à l'opérateur $G_y$ reçoivent deux autres signaux alternatifs opposés, lesdits signaux associés à l'opérateur $G_x$ et lesdits autres signaux associés à l'opérateur $G_y$ étant en quadrature.

Sur la figure 4A, on a représenté á titre d'exemple un moyen d'entrée pour opérer une conversion optoélectrique d'un signal optique bidimensionnel délivrant, pour chaque point élémentaire, 4 tensions alternatives comme indiqué ci-dessus.

Ce moyen d'entrée comprend un ensemble de 4 conducteurs électriques 44A, 44B, 44C, 44D gravés dans une couche conductrice déposée sur un substrat transparent 42. Ces conducteurs ont une géométrie et sont imbriquégis de telle sorte qu'une fraction de chacun de ceux-ci se trouve au droit de chaque point élémentaire 40. Ces fractions constituent les éléments conducteurs 46A, 46B, 46C et 46D associés au point élémentaire 40.

Les éléments conducteurs définis ici ne sont pas identiques aux éléments conducteurs 24 définis en référence aux figures 1 à 3 car ils véhiculent une tension d'alimentation, de module fixé, et non pas une tension fonction du signal bidimensionnel reçu. On ne peut pas définir ici un point élémentaire d'entrée au sens des figures 1 à 3, c'est-à-dire un ensemble d'éléments conducteurs reliant électriquement le moyen d'entrée au moyen de traitement.

Les éléments conducteurs 46A et 46D reçoivent des signaux de tension alternatifs opposés. De même les éléments conducteurs 46B et 46C reçoivent des signaux de tension alternatifs opposés, ces signaux de tension étant en quadrature avec les signaux reçus par les éléments conducteurs 46A et 46D.

Une couche 48 photoconductrice et résistive est déposée sur les conducteurs électriques. Cette couche peut être en a:Si-H dopé de manière convenable. Elle est elle-même recouverte d'une couche électriquement isolante 50 comportant une pluralité de trous 52, 54, comme on l'a représenté sur la figure 4B. Comme on l'a indiqué plus haut, la tension présente à la base de chaque trou reflète l'intensité lumineuse du signal optique reçu par le point élémentaire d'entrée affectée d'un coefficient lié à la taille de ce trou et d'un signe (d'une phase pour un signal alternatif) lié au conducteur d'entrée au droit duquel se trouve ledit trou.

Pour l'opérateur "SOBEL tronqué", les coefficients non nuls sont, en valeur absolue, égaux à 1 ou 2. Ces coefficients sont traduits respectivement dans le moyen de traitement par des trous 52 et des trous 54, les trous 52 étant plus petits que les trous 54.

Ces trous permettent de réaliser un contact électrique entre d'une part la couche 48 photoconductrice et résistive et d'autre part les éléments conducteurs 56 gravés dans une couche conductrice 58 déposée sur la couche isolante 50. Chaque élément conducteur 56 reçoit simultanément les 4 signaux correspondant aux 4 coefficients de la composante $G_x$ de l'opérateur "SOBEL tronqué" et les 4 signaux correspondant aux 4 coefficients de la composante $G_y$ de l'opérateur "SOBEL tronqué".

La tension présente sur chaque élément conducteur 56 est donc égale au module du signal dont les composantes sont les signaux de sortie correspondant respectivement aux opérateurs $G_x$ et $G_y$. Cette tension est donc la tension de sortie du point élémentaire.

Ainsi qu'on l'a représenté sur la figure 4C, cette couche conductrice 58 est recouverte d'une couche isolante 60 dans laquelle sont percés des trous de contact 62, chaque trou de contact correspondant à un point élémentaire. Cette couche isolante 60 est ellemême recouverte d'une couche conductrice 64 dans laquelle sont gravés les points élémentaires de sortie 66.

L'image électrique formée par l'ensemble des signaux de tension délivrés par les points élémentaires de sortie peut être exploitée selon toute manière connue de l'homme de l'art. De manière avantageuse, on peut recouvrir la couche conductrice 62 par un film de cristal liquide puis par une électrode transparente reliée à la masse. Le moyen de sortie, constitué par ces deux dernières couches, forme alors un afficheur à cristaux liquides qui permet de visualiser directement l'image traitée. Selon un autre mode de réalisation avantageux, le moyen de sortie peut être constitué d'une matrice d'adressage pour transmettre l'image traitée sous forme d'une trame d'un signal vidéo.

## Revendications

1. Dispositif analogique parallèle de traitement local d'un signal bidimensionnel comprenant un moyen d'entrée (4), un moyen de traitement (6) et un moyen de sortie (8), ledit dispositif étant caractérisé en ce que :
- le moyen d'entrée reçoit ledit signal bidimensionnel et délivre sur un ensemble de points élémentaires organisés en matrice un ensemble de signaux électriques parallèles d'entrée ;
- le moyen de traitement comporte :
  – une première couche conductrice dans laquelle est gravé un ensemble de lignes conductrices (24) parallèles, lesdites lignes véhiculant pour chaque point élémentaire deux signaux électriques de signes opposés générés par le moyen d'entrée,
  – une couche résistive (26),
  – une couche isolante (26),
  – une deuxième couche conductrice dans laquelle est gravé un ensemble de lignes conductrices parallèles (32), chacune des lignes étant reliée à la couche résistive par une pluralité de trous de contacts ménagés dans la couche isolante (28), la surface desdits trous de contact représentant les coefficients de l'opérateur linéaire,
  –une couche isolante (34),
  – une troisième couche conductrice dans laquelle sont gravés les points élémentaires de sortie, chacun relié à une ligne conductrice par un trou dans la seconde couche isolante.

2. Dispositif analogique parallèle de traitement local d'un signal bidimensionnel comprenant un moyen d'entrée (4), un moyen de traitement (6) et un moyen de sortie (8), ledit dispositif étant caractérisé en ce que :
- le moyen d'entrée et le moyen de traitement comportent une couche photoconductrice et résistive (48) ;
- une couche de lignes conductrices (44A, 44B, 44C, 44D) de géométrie telle que quatre fractions de conducteur se trouvent au droit de chaque point élémentaire conducteur (56), ces lignes véhiculant des tensions alternatives opposées deux à deux et en quadrature ; et
- une couche isolante (50) placée sur la couche photoconductrice et résistive (48) et comportant une pluralité de trous (52, 54), la tension présente à la base de chaque trou reflétant l'intensité lumineuse du signal optique reçu par le point élémentaire affecté d'un coefficient lié à la taille du trou et d'un signe lié au conducteur au droit duquel il se trouve.

3. Dispositif selon la revendication 1, pour le traitement d'un signal optique bidimensionnel, caractérisé en ce que le moyen d'entrée comporte une couche photoconductrice (18).

4. Dispositif selon la revendication 1, caractérisé en ce que le moyen de traitement comprend en outre une première couche isolante (20) placée sur l'ensemble de lignes conductrices (24).

5. Dispositif selon l'une quelconque des revendications 1 à 4, caractérisé en ce que le traitement de chaque signal d'entrée est limité à une fenêtre spatiale de taille déterminée.

6. Dispositif selon l'une quelconque des revendications , 1 à 5, caractérisé en ce que le moyen de sortie comporte un moyen d'affichage.

7. Dispositif selon l'une quelconque des revendications 1 à 6, caractérisé en ce que le moyen d'affichage est un afficheur à cristal liquide.

8. Dispositif selon l'une quelconque des revendications 1 à 7, caractérisé en ce que le moyen de sortie comprend une matrice d'adressage.

## Claims

1. Device for the parallel analog local processing of a bidimensional signal comprising an input means, a processing means (6) and an output means (8), the input means (4) receiving the said bidimensional signal and supplying on a group of elementary input points organized in matrix-like form, a group of parallel electric input signals, the processing means comprising a first conductive film in which is etched a group of parallel conductive lines (24), which for each elementary point carry two electric signals of opposite signs generated by the input means, a resistive film (26), an insulating film (28), a second conductive film in which is etched a group of parallel conductive lines (32), each of which is connected to the resistive film by a plurality of contact holes made in the insulating film (28), the surface of said contact holes representing coefficients of the linear operator, an insulating film (24), a third conductive film in which are etched the elementary output points, each being connected to a conductive line by a hole in the second insulating film.

2. Analog parallel device for the local processing of a bidimensional signal comprising an input means, a processing means and an output means (8), said device being characterized in that the input means (4) and the processing means (6) comprise a photoconductive and resistive film (48), a layer of conductive lines (44a, 44b, 44c, 44d) having a geometry such that four conductor fractions are located to the right of each elementary conductive point (56), said lines carrying alternating voltages opposing one another pairwise and in quadrature and an insulating film (50), placed on the photoconductive and resistive film (48), and having a plurality of holes (52, 54), the voltage present at the base of each hole reflecting the light intensity of the optical signal received by the elementary point having a coefficient linked with the size of the hole and a sign linked with the conductor to the right of which it is located.

3. Device according to claim 1 for processing a bidimensional optical signal, characterized in that the input means comprises a photoconductive film (18).

4. Device according to claim 1, characterized in that the processing means also comprises a first insulating film (20) placed on the group of conductive lines (24).

5. Device according to any one of the claims 1 to 4, characterized in that the processing of each input signal is limited to a spatial window of predetermined size.

6. Device according to any one of the claims 1 to 5, characterized in that the output means comprises a display means.

7. Device according to any one of the claims 1 to 6, characterized in that the display means is a liquid crystal display.

8. Device according to any one of the claims 1 to 7, characterized in that the output means comprises an addressing matrix.

## Patentansprüche

1. Parallele Analogvorrichtung zur lokalen Bearbeitung eines zweidimensionalen Signals mit einer Eingangsvorrichtung (4), einer Verarbeitungsvorrichtung (6) und einer Ausgangsvorrichtung (8), wobei die Vorrichtung dadurch gekennzeichnet ist, daß
– die Eingangsvorrichtung das zweidimensionale Signal empfängt und an eine Gesamtheit von Elementarpunkten, die in einer Matrix organisiert sind, eine Gesamtheit von parallelen, elektrischen Eingangssignalen anlegt;
– die Verarbeitungsvorrichtung umfaßt:
– eine erste leitfähige Schicht, in die eine Gesamtheit von parallelen, leitfähigen Leitungen (24) geätzt sind, wobei die Leitungen für jeden Elementarpunkt zwei elektrische Signale mit entgegengesetztem Vorzeichen, die von der Eingangsvorrichtung erzeugt werden, transportiert,
– eine Widerstandsschicht (26),
– eine isolierende Schicht (28),
– eine zweite leitfähige Schicht, in die eine Gesamtheit von parallelen, leitfähigen Leitungen (32) geätzt ist, wobei jede der Leitungen mit der Widerstandsschicht über eine Mehrzahl von Kontaktlöchern, die in die Isolierschicht (28) gearbeitet sind, verbunden ist, wobei die Oberfläche dieser Kontaktlöcher die Koeffizienten des linearen Operators darstellen,
– eine isolierende Schicht (34),
– eine dritte leitfähige Schicht, in die die elementaren Ausgangspunkte geätzt sind, wobei jeder mit einer leitfähigen Leitung über ein Loch in der zweiten Isolierschicht verbunden ist.

2. Parallele Analogvorrichtung zur lokalen Bearbeitung eines zweidimensionalen Signals mit einer Eingangsvorrichtung (4), einer Verarbeitungsvorrichtung (6) und einer Ausgangsvorrichtung (8), wobei die Vorrichtung dadurch gekennzeichnet, daß
– die Eingangs- und die Verarbeitungsvorrichtung aufweisen: eine Photoleiter- und eine Widerstandsschicht (48);
– eine Schicht aus leitfähigen Leitungen (44A, 44B, 44C, 44D) mit solcher Geometrie, daß vier Leiterteile sich rechts von jedem elementaren Leiterpunkt (56) befinden, wobei diese Leitungen einander zwei zu zwei und im Quadrat entgegengesetzte Wechselspannungen transportieren; und
– eine isolierende Schicht (50), die auf der Photoleiter- und Widerstandsschicht (48) angeordnet ist und eine Mehrzahl von Löchern (52, 54) aufweist, wobei die an der Basis jede Lochs anliegende Spannung die Lichtintensität des optischen Signal widerspiegelt, das von dem Elementarpunkt empfangen wurde, der mit einem mit der Größe des Lochs verbundenen Koeffizienten und mit einem mit dem Leiter, zu dessen Rechten er sich befindet, verbundenen Vorzeichen behaftet ist.

3. Vorrichtung nach Anspruch 1 für die Bearbeitung eines zweidimensionalen, optischen Signals, dadurch gekennzeichnet, daß die Eintrittsvorrichtung eine Photoleiterschicht (18) aufweist.

4. Vorrichtung nach Anspruch 1, dadurch gekennzeichnet, daß die Verarbeitungsvorrichtung außerdem eine erste Isolierschicht (20) aufweist, die über der Gesamtheit der leitfähigen Leitungen (24) angeordnet ist.

5. Vorrichtung nach einem der Ansprüche 1 bis 4, dadurch gekennzeichnet, daß die Verarbeitung jedes Eingangssignals auf ein räumliches Fenster bestimmter Größe beschränkt ist.

6. Vorrichtung nach einem der Ansprüche 1 bis 5, dadurch gekennzeichnet, daß die Ausgangsvorrichtung eine Anzeigevorrichtung aufweist.

7. Vorrichtung nach einem der Ansprüche 1 bis 6, dadurch gekennzeichnet, daß die Anzeigevorrichtung eine Flüssigkristallanzeige ist.

8. Vorrichtung nach einem der Ansprüche 1 bis 5, dadurch gekennzeichnet, daß die Ausgangsvorrichtung eine Adressmatrix aufweist.

FIG.1

FIG.3

38

36

34

32

28

26

30A

32

30B

24

20

22B

22A

18

24

20

P

A

16A

16B

16

14

# FIG.2

40

46A

46C

46B

46D

48

42

44C  44D  44B  44C  44D  44B

44A  44A

FIG.4A

FIG.4B

FIG.4C